Europäisches Patentamt

European Patent Office

Office européen des brevets

(11) Publication number: **0 247 863 B1**

# EUROPEAN PATENT SPECIFICATION

(45) Date of publication of patent specification: **22.07.92**    (51) Int. Cl.⁵: **B62D  5/04**

(21) Application number: **87304708.8**

(22) Date of filing: **27.05.87**

(54) **Motor-driven power steering system for a vehicle.**

(30) Priority: **27.05.86 JP 124009/86**
**11.07.86 JP 164161/86**

(43) Date of publication of application:
**02.12.87 Bulletin  87/49**

(45) Publication of the grant of the patent:
**22.07.92 Bulletin  92/30**

(84) Designated Contracting States:
**DE FR GB**

(56) References cited:
**EP-A- 0 174 137**
**DE-A- 3 504 561**

**PATENT ABSTRACTS OF JAPAN, vol. 10, no.
62 (M-460)[2119], 12th March 1986; & JP-A-60
209 365 (NIPPON SEIKO K.K.) 21-10-1985**

(73) Proprietor: **MITSUBISHI DENKI KABUSHIKI
KAISHA
2-3, Marunouchi 2-chome Chiyoda-ku
Tokyo 100(JP)**

(72) Inventor: **Morishita, Mitsuhara c/o Himeji
Seisakusho
Mitsubishi Denki K.K. 840, Chiyoda-cho
Himeji City Hyogo Prefecture(JP)**
Inventor: **Kohge, Shinichi c/o Himeji
Seisakusho
Mitsubishi Denki K.K. 840, Chiyoda-cho
Himeji City Hyogo Prefecture(JP)**

(74) Representative: **Hackett, Sean James et al
Marks & Clerk 57-60 Lincoln's Inn Fields
London WC2A 3LS(GB)**

PATENT ABSTRACTS OF JAPAN, vol. 10, no. 216 (M-502)[2272], 29th July 1986; & JP-A-61 54 363 (JIDOSHA KIKI CO. LTD) 18-03-1986

PATENT ABSTRACTS OF JAPAN, vol. 10, no. 62 (M-460)[2119], 12th March 1986; & JP-A-60 209 366 (JIDOSHA KIKI K.K.) 21-10-1985

PATENT ABSTRACTS OF JAPAN, vol. 10, no. 216 (M-502)[2272], 29th July 1986; & JP-A-61 54 364 (JIDOSHA KIKI K.K.) 18-03-1986

PATENT ABSTRACTS OF JAPAN, vol. 9, no. 223 (M-411)[1946], 10th September 1985; & JP-A-60 80 970 (NISSAN JIDOSHA K.K.) 08-05-1985

PATENT ABSTRACTS OF JAPAN, vol. 8, no. 152 (M-309)[1589], 14th July 1984; & JP-A-59 48 264 (TOYO KOGYO K.K.) 19-03-1984

**Description**

I. Field of the Invention

This invention relates to a motor-driven power steering system for a vehicle adapted to assist the operator-induced steering operation by means of the rotative force of a motor.

2. Description of the Prior Art

In the past, a conventional power steering system of this type, as schematically illustrated in Fig. I, has hitherto been known in which a steering wheel I is operatively connected through a steering shaft 2 having an upper portion 2a and a lower portion 2b and a first rack and pinion gear $T_1$ including a first pinion 5 and a first rack tooth portion 6a with a steering rack 6 which is connected at its opposite ends with a pair of steerable road wheels (not shown) through a pair of tie rods 8a, 8b so that when the steering wheel I is turned by an operator, the steerable road wheels (not shown) are appropriately steered in accordance with the steering motion of the steering wheel I imparted by the operator. On the other hand, the steering rack 6 is operatively connected with a motor I3 through a second rack and pinion gear $T_2$ including a second rack tooth portion 6b and a second pinion I7, a speed-reduction gear R, and a switching clutch I6 so that the driving force of the motor I3 is transmitted through the speed-reduction gear R, the switching clutch I6 and the second rack and pinion gear $T_2$ to the rack 6 so as to assist the steering operation of the steering wheel I imparted by the operator. The motor I3 is electrically connected with a battery 11 through a control unit 9 and a key or ignition switch 12 so that it is energized by the battery 11 under the control of the control unit 9. The control unit 9 is input with control signals from a steering-torque sensor 3 and a vehicle-speed sensor 10 so as to appropriately control the operations of the motor 13 and the switching clutch 17 on the basis of the steering torque and the vehicle speed measured.

However, the power steering system as constructed above has the following problems. Specifically, when the travelling speed of the vehicle increases above or decreases below a prescribed level, the control unit 9 operates to deenergize or energize the switching clutch 17 to interrupt or enable the transmission of the assisting force from the motor 13 to the rack 6 so as to switch the steering system into a manual steering mode without any power assist or into a power steering mode with power assist. In this case, if the speed sensor 10 has failed or an electrical line or wiring connecting the speed sensor 10 to the control unit 9 is broken for some reason, no output signal is fed to the control unit 9 so that the motor 13 continues to operate with the clutch 16 connected. As a result, the steering system is continuously held in a power steering mode even when the vehicle speed exceeds the prescribed speed level. Such a situation is unfavorable from the standpoint of safety in driving of the vehicle.

Japanese patent abstract volume 10 No. 62, relating to Japanese patent specification JP-A-60 209 365 relates to a power steering system for a vehicle comprising a motor for transmitting a power assisting force to the wheels of the vehicle. A control means controls the transmission of the power steering force in dependence upon the speed of the vehicle. A trouble judging circuit is provided for generating a trouble signal if trouble is detected in the system. The control means is operative for disenabling the transmission of the power steering force in dependence on the trouble signal.

Japanese patent abstract of Japan Volume 9 No. 223, relating to Japanese patent specification JP-A-6 154 363 relates to a method of judging abnormality in a vehicle speed sensor of an electronic power steering gear control system. The system has a controller for disenabling the power steering force in the event that the control means fails to receive speed signals. When the speed sensor is broken, the oil supplied into the power steering apparatus is reduced thereby increasing the steering force.

SUMMARY OF THE INVENTION

In view of the above, the present invention is intended to obviate the above-described problem of the prior art, and has for its object the provision of a motor-driven power steering system for a vehicle which can ensure safety in high-speed driving of the vehicle even when the speed sensor has failed or the wiring connecting between the speed sensor and the control unit is broken.

According to the present invention, there is provided a power steering system for a vehicle comprising means, including a motor, provided for transmitting a power steering force to the wheels of the vehicle thereby to assist the steering motion of the vehicle, and control means for controlling the transmission of the power steering force in dependence upon the speed of the vehicle, wherein the control means is operative for disenabling the transmission of the power steering force in the event that trouble is detected in the system; characterised in that motion determining means is provided for determining whether the vehicle is in motion in dependence upon either the degree of opening of a throttle valve measured by a throttle opening measuring means and/or changes in vehicle height measured by a vehicle height sensor; trouble being detected in the system when the motion determining means determines that the vehicle is in motion and the control means fails to receive speed signals indicative of the speed of the vehicle.

Optional but preferred features of the invention are defined in the dependent claims.

The above and other objects, features and advantages of the present invention will become apparent from the following detailed description of a few presently preferred embodiments of the invention when taken in conjunction with the accompanying drawings.

BRIEF DESCRIPTION OF THE DRAWINGS

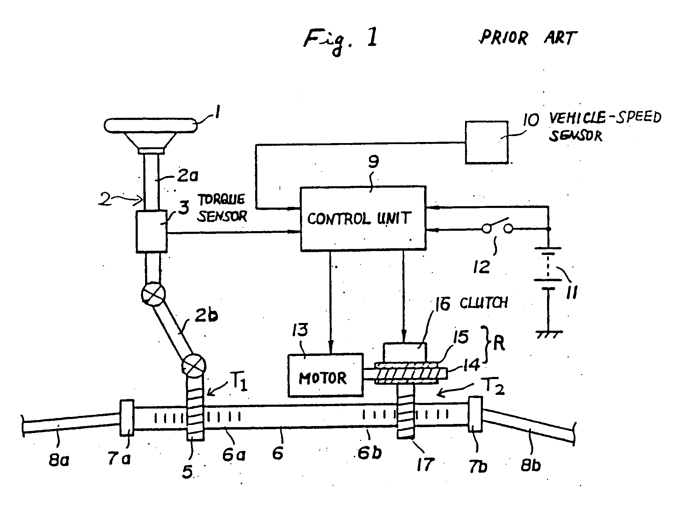

Fig. 1 is a schematic view illustrating the general arrangement of a motor-driven power steering system for a vehicle having a conventional control unit;

Figs. 2 through 5 relate to a motor-driven power steering system in accordance with one embodiment of the present invention, in which:

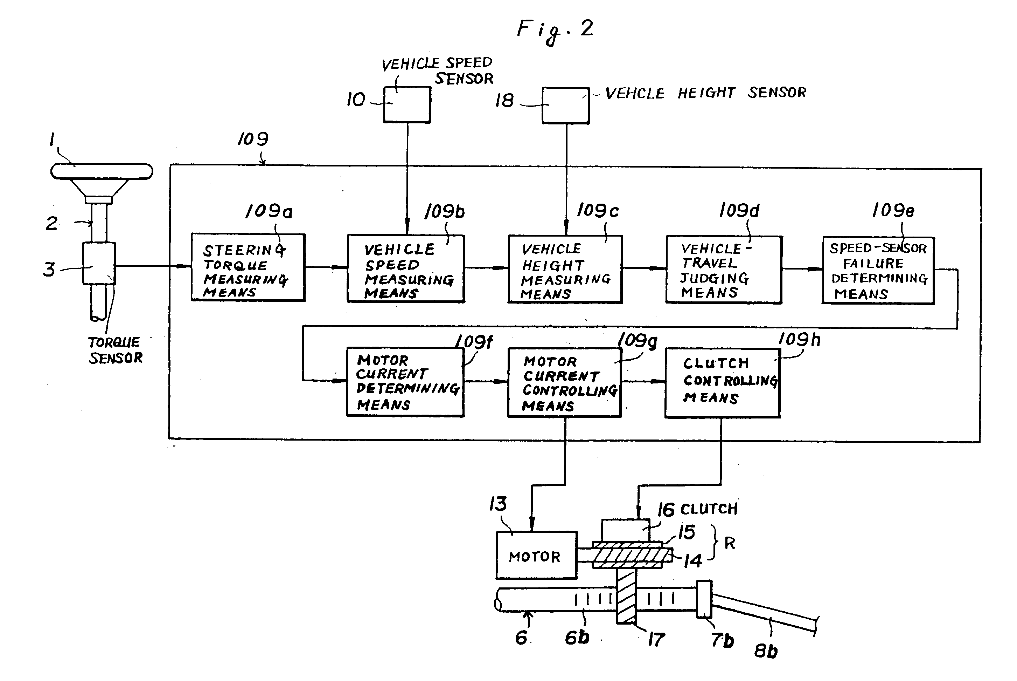

Fig. 2 is a block diagram showing a control unit and its related parts;

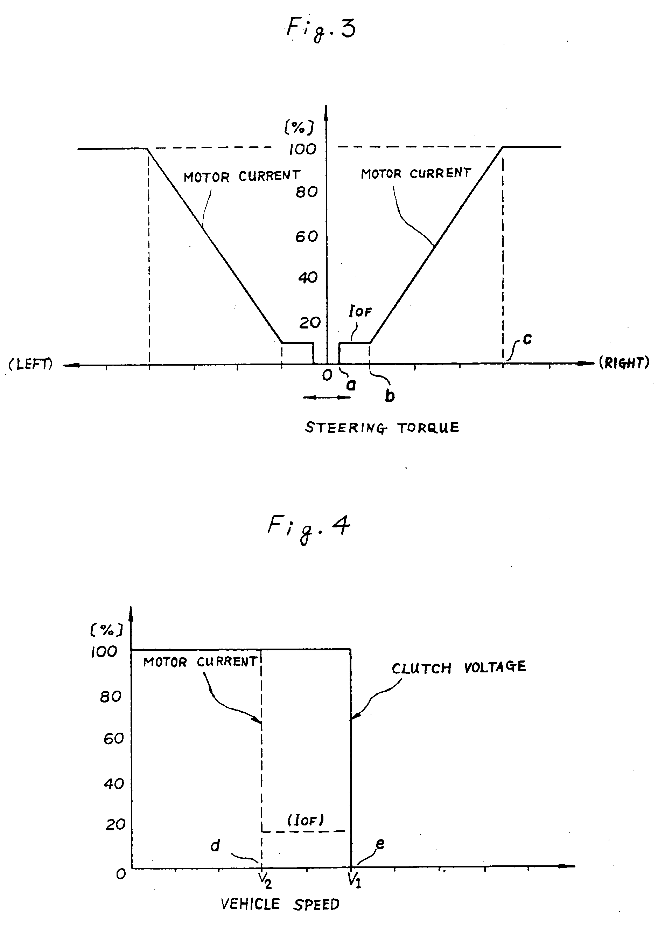

Fig. 3 is a characteristic view showing a relationship between the motor current and the steering torque;

Fig. 4 is a characteristic view showing a vehicle-speed/motor-current relationship and a vehicle-speed/clutch-voltage relationship; and

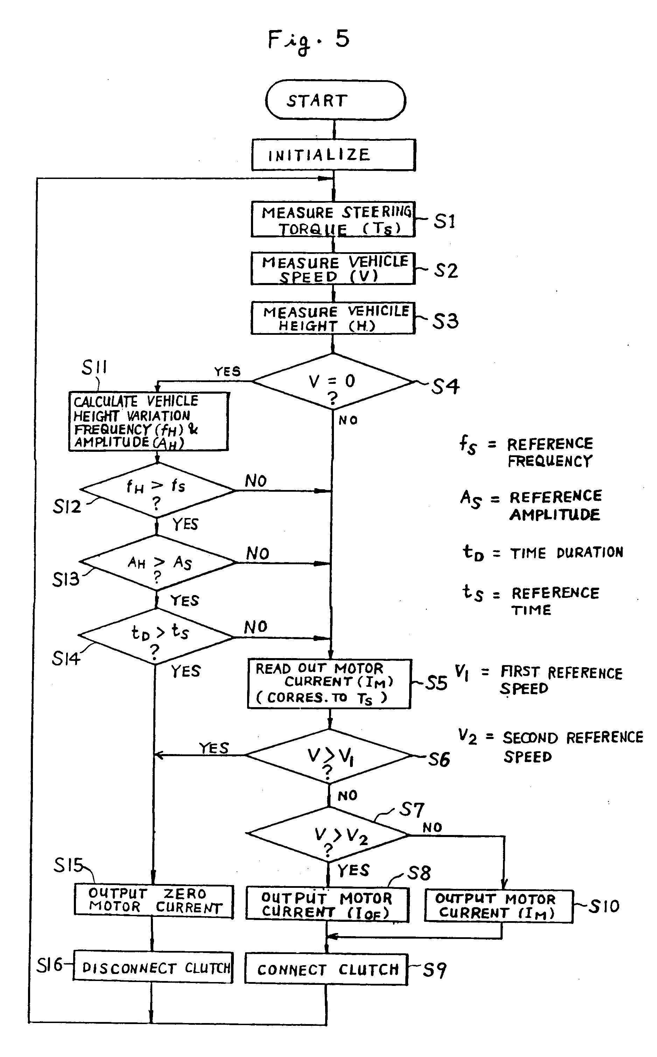

Fig. 5 is a flow chart showing the control process of the power steering system illustrated in Fig. 2.

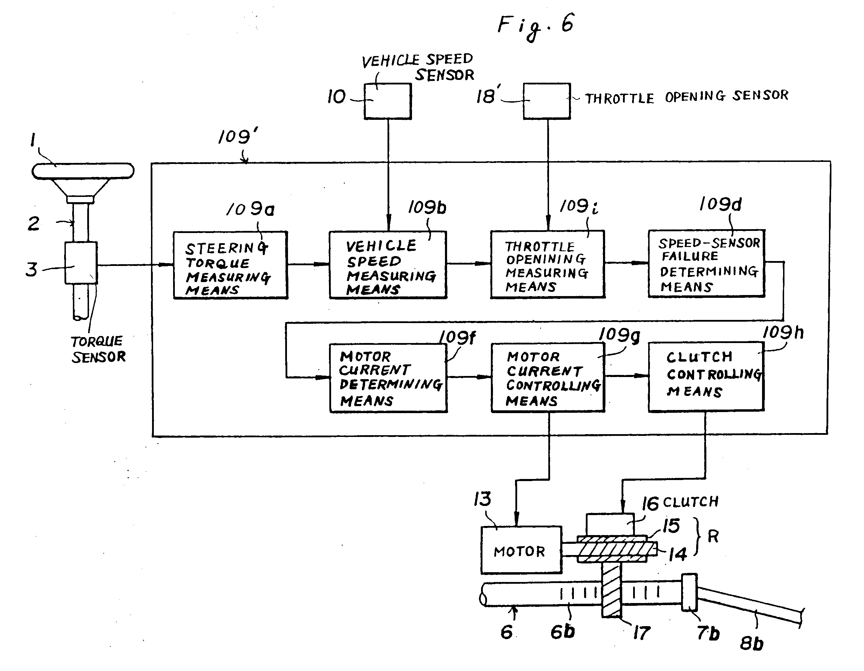

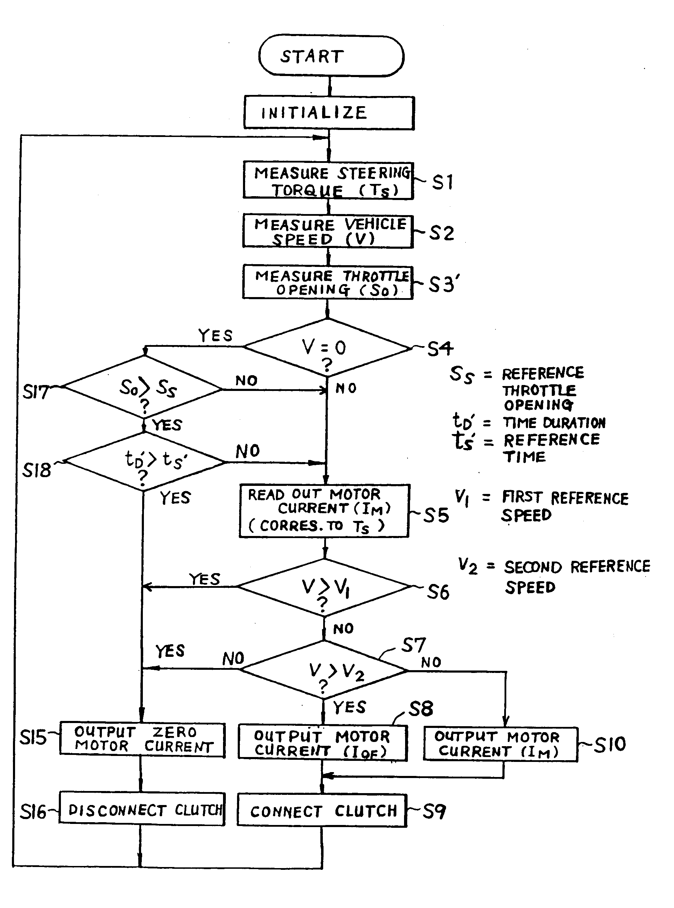

Figs. 6 and 7 relate to a motor-driven power steering system in accordance with another embodiment of the present invention, in which:

Fig. 6 is a block diagram showing a control unit and its related parts; and

Fig. 7 relates to a flow chart showing the control process of the power steering system illustrated in Fig. 6.

DESCRIPTION OF THE PREFERRED EMBODIMENTS

The present invention will now be described in detail with reference to a few presently preferred embodiments thereof as illustrated in the accompanying drawings. In the following, the same parts or elements of the embodiments will be identified by the same reference numerals and characters as employed in Fig. l.

Referring to the drawings and first to Fig. 2, there is shown a motor-driven power steering system having a control unit l09 constructed in accordance with one embodiment of the present invention. As diagrammatically illustrated in Fig. 2, the control unit l09 is adapted to receive the output signals from a torque sensor 3, a vehicle speed sensor l0 and a vehicle height sensor l8 for controlling the operations of a motor l3 in the form of a DC motor and a clutch means l6 in the form of an electromagnetic switching clutch in a manner such that the power-assisting force transmitted from the motor l3 to the steerable road wheels (not shown) is controlled in accordance with the travelling speed of the vehicle and the steering torque imparted to the steering wheel l by the operator under the normal operating condition of the vehicle speed sensor l0, but reduced to zero if the vehicle speed sensor l0 has failed and/or an electric line or wiring connecting between the vehicle speed sensor l0 and the control unit l09 is cut or broken.

Specifically, as shown in Fig. 2, the control unit l09 comprises: a steering torque measuring means l09a adapted to receive the output signal of the torque sensor 3 for measuring the operator-induced steering torque; a vehicle speed measuring means l09b adapted to receive the output signal of the vehicle speed sensor l0 for measuring the travelling speed of the vehicle; a vehicle height measuring means l09c adapted to receive the output signal from the vehicle height sensor l8 and generate an output signal having a variation frequency and a variation amplitude which correspond to the measured vehicle height; a vehicle travel judging means l09d adapted to receive the output signal of the vehicle height measuring means l09c and judge that the vehicle is travelling when the variation frequency and the variation amplitude of the output signal of the vehicle height measuring means l09c are greater than respective prescribed reference values for a time duration exceeding a preset period; a speed-sensor failure determining means l09e adapted to receive the output signals of the vehicle speed measuring means l09b and the vehicle travel judging means l09d and determine that there is failure in the vehicle speed sensor l0 and/or breaks in the wiring connecting between the vehicle speed sensor l0 and the control unit l09 when the output of the vehicle speed measuring means l09b is zero and when the vehicle travel judging means l09d judges that the vehicle is travelling; a motor-current determining means l09f adapted to determine an appropriate level of current supplied to the motor l3 in a manner such that the motor current is determined on the basis of the output signals of the steering torque measuring means l09a and the vehicle speed measuring means l09b in the normal operating condition of the vehicle speed sensor l0, but made zero when the speed-sensor failure determining means l09e determines that there is failure in the vehicle speed sensor l0 and/or breaks in the wiring connecting between the vehicle speed sensor I0 and the control unit I09; a motor-current controlling means I09g for controlling the current supplied to the electromagnetic switching clutch I6 in accordance with the output from the motor-current determining means I09f; and a clutch controlling means I09h for controlling the operation of the electromagnetic switching clutch I6 in a manner such that the clutch I6 is switched off when the measured vehicle speed is above a prescribed level or when the speed-sensor failure determining means I09e determines that there is failure in the vehicle speed sensor I0 and/or breaks in the wiring connecting between the vehicle speed sensor I0 and the control unit I09, and switched on when the measured vehicle speed is below the prescribed level.

Now, the operation of the control unit I09 will be described in detail with reference to Figs. 3 through 5. First, the case in which a vehicle is stationary or standing still will be considered. In this case, when a key or ignition switch (not shown) is first turned on to start the engine, the electromagnetic switching clutch I6 is automatically actuated to place the second pinion I7 into mechanical coupling with the worm wheel I5. In this state, when the steering wheel I is turned by an operator, the control unit I09 acts to control the operation of the motor I3 in the form of a DC motor in the manner as illustrated in Fig. 3. More specifically, when steering torque increases in the righthand direction to point a in Fig. 3, the motor I3 is turned on and supplied with an offset current of a certain low level $I_{OF}$ (for example, about 2 to I0 amperes) in order to alleviate the inertia influence from the motor I3 and the mechanical portions. As the steering torque further increases, the current supplied to the motor I3 begins to increase, at point b, linearly in direct proportion to the intensity of steering torque, and reaches I00 % current at point c. On the other hand, as the steering torque decreases, current flowing through the motor I3 begins to decrease at point c and becomes to be the offset level $I_{OF}$ at point b. When the steering torque further decreases and reaches point a, the current supply to the motor I3 is reduced to zero and the motor I3 is stopped. Similar to this, the motor I3 is controlled in the same manner when the steering torque increases or decreases in the lefthand direction. In this connection, it is to be noted that the power-assisting torque generated by the motor I3 is in direct proportion to the current supplied thereto.

Accordingly, as pictured in Fig. 3, as the steering torque increases, the motor I3 is energized or turned on at point a and supplied with the offset current $I_{OF}$. As the steering torque further increases, the current supplied to the motor I3 begins to gradually increase at point b so that the output torque of the motor I3 to be transmitted to the worm I4 accordingly increases gradually. As a result, the assisting torque having the intensity corresponding to the operator's steering effort applied to the steering wheel I is transmitted to the second rack tooth portion 6b on the steering rack 6 through the intermediary of the worm wheel I5, the electromagnetic switching clutch I6 and the second pinion I7, thereby lightening the steering operation for the operator.

Now, the case in which the vehicle is travelling will be considered. In this case, as seen from Fig. 4, the control unit I09 controls the operations of the motor I3 and the electromagnetic switching clutch I6 in the following manner. The current supplied to the motor I3 is reduced to an offset current level $I_{OF}$ (about 2 - I0 amperes) at point d in Fig. 4 at which the vehicle speed increases to a prescribed second reference speed $V_2$, held constant at the offset current level $I_{OF}$ until the vehicle speed further increases to a prescribed first reference speed level $V_1$ at point e in Fig. 4, and reduced to zero at point e. Also, the voltage imposed on the clutch I6 is held constant at I00% level until the vehicle speed increases to the first reference speed level $V_1$ at point e, and made zero at the first reference speed level $V_1$ so that the clutch I6 is switched off to release the mechanical connection between the worm wheel I5 and the second pinion I7, thereby making the steering operation for the operator heavier without any power assist.

With the prior art motor-driven power steering system as previously referred to, however, if there is failure in the vehicle speed sensor I0 or breaks in the wiring connecting between the speed sensor I0 and the control unit I09, it becomes impossible to control the power steering system in accordance with the travelling speed of the vehicle so that the steering system is continuously held in a power steering mode even when the vehicle travels at high speed. As a result, the steering operation for the operator becomes too lighter, thus reducing safety in driving at high speed.

In this case, however, according to the present invention, the power steering system is changed into a manual steering mode so as to avoid the above situation. To this end, according to this embodiment, failure in the vehicle speed sensor I0 and/or breaks in the wiring connecting the speed sensor I0 to the control unit I09 is first detected in the following manner. Namely, as illustrated in Fig. 2, the output signal of the vehicle height sensor I8 is input to the vehicle height measuring means I09c which outputs to the vehicle travel judging means I09d a vehicle height signal having a variation frequency $f_H$ and a variation amplitude $A_H$ which correspond to the measured vehicle height H. The vehicle travel judging means I09d judges from the vehicle height signal of the vehicle height measur-

ing means 109c whether or not the vehicle is travelling. If the variation frequency $f_H$ and the variation amplitude $A_H$ of the vehicle height signal continue to be greater than respective prescribed reference values (for example, 0.5 Hz and ± 1 cm) for more than a prescribed time duration (for example, 5 seconds), it is judged that the vehicle is travelling. In this state, if the vehicle speed V as measured by the vehicle speed measuring means 109b is zero, that is if the output signal of the vehicle speed measuring means 109b is zero, the speed-sensor failure determining means 109e determines that there is failure in the speed sensor 18 and/or breaks in the wiring connecting between the speed sensor 18 and the control unit 109, and operates, if so determined, to make the current supplied to the motor 13 and the voltage imposed on the electromagnetic switching clutch 16 into zero, thereby changing the steering system into a non-power assisted manual steering mode.

More specifically, as illustrated in the flow chart of Fig. 5, the control unit 109 is initialized after the key or ignition switch is turned on, and then, at step S1, from the output signal of the steering torque sensor 3, the steering torque measuring means 109a measures the steering torque imparted to the steering wheel 1 by the operator. At step S2, from the output signal of the vehicle-speed sensor 10, the vehicle-speed measuring means 109b measures the travelling speed V of the vehicle and generates an output signal representative of the measured vehicle speed V, and at step S3, from the output signal of the vehicle height sensor 18, the vehicle height measuring means 109c measures the height H of the vehicle from the ground and generates a vehicle height signal having a variation frequency $f_H$ and a variation amplitude $A_S$ which correspond to the measured vehicle height. At step S4, it is determined that whether or not the measured vehicle speed V is equal to zero, and if not, the control process proceeds to step S5 where a motor current corresponding to the measured steering torque $T_S$ is read out. Then, at step S6, it is determined whether or not the vehicle speed V is greater than a first reference speed $V_1$, and if V > $V_1$, the control process proceeds to step S15, and if V ≤ $V_1$, the control process proceeds to step S7 where it is further determined whether or not the vehicle speed V is greater than a second reference speed $V_2$ which is smaller than the first reference speed $V_1$. If V > $V_2$, the motor current is reduced to an offset current level $I_{OF}$ (for example 2 - 10 ampere), and the clutch 16 is connected at step S9. At step S7, however, if V ≤ $V_2$, the control process proceeds to step S10 where the motor current $I_M$ corresponding to the measured steering torque $T_S$ is output, and then the control process proceeds to step S9.

On the other hand, at step S4, if it is judged that the vehicle speed is equal to zero, the control process proceeds to step S11 where the variation frequency $f_H$ and the variation amplitude $A_H$ of the vehicle height signal H is calculated. Then, at step S12, it is determined whether or not the calculated variation frequency $f_H$ of the vehicle height signal H is greater than a prescribed reference frequency $f_S$, and if not, the control process proceeds to step S5 but if so, at step S13, it is determined whether or not the calculated variation amplitude $A_H$ of the vehicle height signal H is greater than a prescribed reference amplitude $A_S$. If not, the control process proceeds to step S5, but if so, at step 14, it is determined whether or not the time duration $t_D$ for which the condition of $f_H$ > $f_S$ and $A_H$ $A_S$ continues is greater than a reference time $t_S$. If $t_D$ ≤ $t_{SD}$ > $t_S$, then the control process proceeds to step S15 where the current supplied to the motor 13 is made zero, and at step S16, the voltage imposed on the electromagnetic switching clutch 16 is also made zero thereby to disconnect the clutch 16. After steps S9 and S16, the control process returns to step S1, and the above-described operations are repeated.

Fig. 6 shows another embodiment of the present invention which has a different control unit 109′. In this embodiment, in place of the vehicle height sensor 18 of the previous embodiment, there is provided a throttle opening sensor 18′ for sensing the opening degree of an unillustrated throttle valve disposed in an unillustrated intake passage of an engine to generate an output signal representative of the detected throttle opening degree, and the control unit 109′ includes, in addition to the same components as those of the previous embodiment denoted by reference numerals 109a, 109b, and 109d through 109h, a throttle opening measuring means 109i in place of the vehicle height measuring means 109c and the vehicle travel judging means 109d. The throttle opening measuring means 109i is adapted to receive the output signal from the throttle opening sensor 18′ for measuring the opening degree $S_O$ of the throttle valve. The speed-sensor failure determining means 109e is adapted to receive the output signals of the vehicle speed measuring means 109b and the throttle opening measuring means 109i and determine whether or not there is failure in the vehicle speed sensor 10 or breaks in the wiring connecting between the vehicle speed sensor 10 and the control unit 109′. In this regard, if the measured opening degree $S_O$ of the throttle valve is greater than a reference throttle opening $S_S$ (for example, 5 - 80% of the full throttle opening) and if zero output of the vehicle speed measuring means 109b continues for a time duration $t_D′$, greater than a reference time $t_S′$, (for example, 10 - 20 seconds), the speed-sensor failure determining means 109e determines that there is failure in the speed sensor 10 and/or breaks in the wiring connecting between the speed sensor 10 and the control unit 109', and operates to make both the motor current and the clutch voltage into zero, thereby changing the steering system into a non-power assisted manual steering mode.

Fig. 7 is the flow chart showing the control process according to the embodiment of Fig. 6. This flow chart is substantially similar to the flow chart of Fig. 5 except for the following. Namely, in this flow chart, the step S3 of Fig. 5 is replaced by step S3', and the steps SII through SI4 of Fig. 5 are replaced by steps SI7 and SI8. At step S3', the throttle opening measuring means 109i measures from the output signal of the throttle opening sensor 18' the opening degree $S_O$ of an unillustrated throttle valve. At step 4, it is determined whether or not the measured vehicle speed V is equal to zero, and if not, the control process proceeds to step S5. On the other hand, if the vehicle speed V is zero, then the control process proceeds to step SI7 where the measured opening degree $S_O$ of the throttle valve is compared with a reference throttle opening $S_S$. If $S_O \leq S_S$, the control process proceeds to step S5, but if $S_O > S_S$, then at step SI8, the time duration $t_D'$ for which zero output of the vehicle speed measuring means 109b continues is compared with a reference time $t_S'$. If $t_D' \leq t_S'$, the control process proceeds to step S5, but if $t_D' > t_S'$, the control process proceeds to step SI5. The control process of this flow chart other than the above is identical to that of Fig. 5 and hence further detailed description thereof will be unnecessary.

## Claims

1. A power steering system for a vehicle comprising means (13,14,15,17), including a motor (13), provided for transmitting a power steering force to the wheels of the vehicle thereby to assist the steering motion of the vehicle, and control means (109) for controlling the transmission of the power steering force in dependence upon the speed of the vehicle, wherein the control means (109) is operative for disenabling the transmission of the power steering force in the event that trouble is detected in the system; characterised in that motion determining means (109) is provided for determining whether the vehicle is in motion in dependence upon either the degree of opening of a throttle valve measured by a throttle opening measuring means (109i) and/or changes in vehicle height measured by a vehicle height sensor (18); trouble being detected in the system when the motion determining means (109) determines that the vehicle is in motion and the control means (109) fails to receive speed signals indicative of the speed of the vehicle.

2. A power steering system according to claim 1, wherein the system is for a vehicle having a steering wheel (1) operatively connected with steerable road wheels so that the steering wheel (1) is turned by an operator to appropriately steer the steerable road wheels, the power steering system comprising:

a torque sensor (3) for detecting steering force imparted to the steering wheel by an operator to generate an output signal representative of the detected steering force;

a vehicle speed sensor (10) for detecting the vehicle speed to generate an output signal representative of the detected vehicle speed;

a source of electric power (11) for energizing the motor (13) for power assisting the steering motion caused by the operator through the steering wheel; and

a clutch (16) adapted to be switched off for interrupting the transmission of the power steering force from the motor to the wheels when the vehicle speed increases above a prescribed level, and switched on for establishing the transmission of the power steering force when the vehicle speed decreases below the prescribed level;

the control means (109) being connected through wirings to the torque sensor (3) and the vehicle speed sensor (10) and being operative for controlling the operations of the motor and the clutch based on the output signals thereof in a manner such that the power steering force transmitted from the motor to the wheels is controlled in accordance with the travelling speed of the vehicle and the steering torque imparted to the steering wheel by the operator under the normal operating condition of the vehicle speed sensor, but reduced to zero if the motion determining means (109) determines that the vehicle is in motion and the vehicle speed sensor has failed and/or the wiring connecting between the vehicle speed sensor and the control unit is broken.

3. A power steering system according to claim 2, wherein the current supplied from the source of electric power (11) to the motor (13) is reduced to zero by the control means (109) in case of failure in the vehicle speed sensor and/or breaks in said wiring connecting between the vehicle speed sensor and the control means (109).

4. A power steering system according to claim 2, wherein the clutch (16) is switched off by the control means (109) in case of failure in the vehicle speed sensor (10) and/or breaks in the wiring connecting between the vehicle speed sensor and the control means (109).

5. A power steering system according to claim 2, 3 or 4, further comprising a vehicle height sensor (18) adapted for detecting the height of the vehicle from the ground and for generating an output signal representative of the detected vehicle height; and wherein the control means (109) comprises:

a steering torque measuring means (109a) adapted for receiving the output signal from the torque sensor (3) for measuring the operator-induced steering torque;

a vehicle speed measuring means (109b) adapted for receiving the output signal from the vehicle-speed sensor (10) for measuring the vehicle speed;

a vehicle height measuring means (109c) adapted for receiving the output signal from the vehicle height sensor (18) and for generating an output signal having a variation frequency and a variation amplitude which correspond to the measured vehicle height;

a vehicle travel judging means (109d) for the motion determining means (109) adapted for receiving the output signal of the vehicle height measuring means (109c) and for judging that the vehicle is travelling when the variation frequency and the variation amplitude of the output signal of the vehicle height measuring means are continuously greater than respective prescribed reference values for a time duration exceeding a prescribed period;

a speed-sensor failure determining means (109e) adapted for receiving the output signals of the vehicle speed measuring means (109b) and the vehicle travel judging means (109d) and for determining that there is failure in the vehicle speed sensor (10) and/or breaks in the wiring connecting between the vehicle speed sensor (10) and the control means (109) when output of the vehicle speed measuring means (109b) is zero and when the vehicle travel judging means (109d) judges that the vehicle is travelling;

a motor-current determining means (109f) adapted for determining an appropriate level of current supplied to the motor (13) in a manner such that the motor current is determined on the basis of the output signals of the steering torque measuring means (109a) and the vehicle speed measuring means (109b) in the normal operating condition of the vehicle speed sensor, but made zero when the speed-sensor failure determining means (109e) determines that there is failure in the vehicle speed sensor (10) and/or breaks in the wiring connecting between the vehicle speed sensor (10) and the control means (109);

a motor-current controlling means (109g) for controlling the current supplied to the motor (13) in accordance with the output from the motor-current determining means (109g); and

a clutch controlling means (109h) for controlling the operation of the clutch (16) in a manner such that the clutch (16) is switched off when the measured vehicle speed is above the prescribed level or when the speed sensor failure determining means (109e) determines that there is failure in the vehicle speed sensor (10) and/or breaks in the wiring connecting between the vehicle speed sensor (10) and the control means (9), and switched on when the measured vehicle speed is below the prescribed level.

6. A power steering system according to claim 2, 3 or 4, further comprising:

a throttle valve disposed in an intake passage of the engine for controlling the flow rate of air sucked into the engine; and

a throttle opening sensor (18) adapted for detecting the opening degree of the throttle valve and generating an output signal representative of the detected throttle opening degree;

and wherein the control means (109) comprises:

a steering torque measuring means (109a) adapted for receiving the output signal from the torque sensor (3) for measuring the operator-induced steering torque;

a vehicle speed measuring means (109b) adapted for receiving the output signal from the vehicle speed sensor (10) for measuring the vehicle speed;

a throttle opening measuring means (109i) adapted for receiving the output signal from the throttle opening sensor (18') for measuring the opening degree of the throttle valve;

a speed-sensor failure determining means (109d) adapted for receiving the output signals of the vehicle speed measuring means (109b) and the throttle opening measuring means (109i) and determining that there is failure in the vehicle speed sensor (10) and/or breaks in the wiring connecting between the vehicle speed sensor (10) and the control means (109) when the opening degree of the throttle valve measured by the throttle opening measuring means (109i) is greater than a prescribed reference value, thereby indicating that the vehicle is in motion, and when zero output of the vehicle speed measuring means (109b) continues for a time duration exceeding a prescribed period;

a motor-current determining means (109f) adapted for determining an appropriate level of current supplied to the motor (13) in a manner such that the motor current is determined on the basis of the output signals of the steering torque measuring means (109a) and the vehicle speed measuring means (109b) in the normal operating condition of the vehicle speed sensor (10), but made zero when the speed-sensor failure determining means (109d) determines that there is failure in the vehicle speed sensor (10) and/or breaks in the wiring connecting between the vehicle speed sensor (10) and the control means (109');

a motor-current controlling means (109g) for controlling the current supplied to the motor in accordance with the output from the motor-current determining means (109f); and

a clutch controlling means (109h) for controlling the operation of the clutch (16) in a manner such that the clutch is switched off when the measured vehicle speed is above the prescribed level or when the speed-sensor failure determining means (109d) determines that there is failure in the vehicle speed sensor (10) and/or breaks in the wiring connecting between the vehicle speed sensor (10) and the control means (109'), and switched on when the measured vehicle speed is below the prescribed level.

## Revendications

1. Dispositif de direction assistée pour un véhicule comprenant des moyens (13, 14, 15, 17), comportant un moteur (13), prévu pour transmettre une force d'assistance au braquage aux roues du véhicule en assistant ainsi le mouvement de braquage du véhicule, et des moyens de commande (109) pour commander la transmission de la force d'assistance au braquage en fonction de la vitesse du véhicule, dans lequel le moyen de commande (109) peut fonctionner pour désactiver la transmission de la force d'assistance au braquage dans le cas où un incident est détecté dans le dispositif; caractérisé en ce qu'un moyen de détermination de déplacement (109) est prévu pour déterminer si le véhicule est en déplacement en fonction soit du degré de l'ouverture d'une soupape d'étranglement mesurée par un moyen de mesure de l'ouverture de l'étranglement (109i) et/ou des changements dans la hauteur du véhicule mesurés par un capteur de la hauteur du véhicule (18); un incident étant détecté dans le dispositif lorsque le moyen de détermination de déplacement (109) détermine que le véhicule est en déplacement et que le moyen de commande (109) ne reçoit pas les signaux de vitesse indiquant la vitesse du véhicule.

2. Dispositif de direction assistée selon la revendication 1, dans lequel le système est prévu pour un véhicule possédant un volant de direction (1) relié pour son fonctionnement à des roues directionnelles du véhicule de façon que le volant de direction (1) soit tourné par un opérateur pour braquer de manière appropriée les roues directionnelles du véhicule, le dispositif de direction assistée comprenant :

un capteur de couple (3) pour détecter une force de braquage transmis à la roue de direction par un opérateur pour produire un signal de sortie représentant la force de braquage détectée;

un capteur de vitesse de véhicule (10) pour détecter la vitesse du véhicule pour produire un signal de sortie représentant la vitesse du véhicule détectée;

une source de puissance électrique (11) pour fournir de l'énergie au moteur (13) pour l'assistance en puissance du mouvement de braquage provoqué par l'opérateur au moyen du volant de direction; et

un embrayage (16) apte à être débrayé pour interrompre la transmission de la force d'assistance au braquage du moteur aux roues lorsque la vitesse du véhicule augmente au-delà d'un niveau prescrit, et embrayé pour établir la transmission de la force d'assistance au braquage lorsque la vitesse du véhicule diminue en-dessous d'un niveau prescrit;

le moyen de commande (109) étant relié par des câbles au capteur de couple (3) et au capteur de vitesse du véhicule (10) et pouvant fonctionner pour commander les fonctionnements du moteur et de l'embrayage basés sur des signaux de sortie de celui-ci de manière que la force d'assistance au braquage transmise depuis le moteur aux roues et commandée en accord avec la vitesse de déplacement du véhicule et le couple de direction transmis au volant de direction par l'opérateur sous une condition de fonctionnement normal du capteur de vitesse du véhicule, mais ramené à zéro si le moyen de détermination de déplacement (109) détermine que le véhicule est en déplacement et que le capteur de vitesse du véhicule n'a pas fonctionné et/ou que la connexion des fils entre le capteur de vitesse du véhicule et l'unité de commande est rompue.

3. Dispositif de direction assistée selon la revendication 2, dans lequel le courant fourni depuis une source de puissance électrique (11) au moteur (13) est ramenée à zéro par le moyen de commande (109) dans le cas d'une défaillance du capteur de vitesse du véhicule et/ou des ruptures dans ladite connexion des fils entre le capteur de vitesse du véhicule et le moyen de commande (109).

4. Dispositif de direction assistée selon la revendication 2, dans lequel l'embrayage (16) est débrayé par le moyen de commande (109) dans le cas d'une défaillance du capteur de vitesse du véhicule et/ou des ruptures dans la connexion des fils entre le capteur de vitesse du véhicule et le moyen de commande (109).

5. Dispositif de direction assistée selon la revendication 2, 3 ou 4 comprenant en outre un capteur de la hauteur du véhicule (18) apte à détecter la hauteur du véhicule depuis le sol et pour produire un signal de sortie représentant la hauteur du véhicule détectée et dans lequel le moyen de commande (109) comprend :

un moyen de mesure du couple de direction (109a) apte à recevoir le signal de sortie du capteur de couple (3) pour mesurer le couple de direction induit par l'opérateur;

un moyen de mesure de la vitesse du véhicule (109b) apte à recevoir le signal de sortie du capteur de vitesse du véhicule (10) pour mesurer la vitesse du véhicule;

un moyen de mesure de la hauteur du véhicule (109c) apte à recevoir le signal de sortie du capteur de la hauteur du véhicule (18) et pour produire un signal de sortie possédant une fréquence de variation et une amplitude de variation correspondant à la hauteur mesurée du véhicule;

un moyen d'appréciation du déplacement du véhicule (109d) pour le moyen de détermination de déplacement (109) apte à recevoir le signal de sortie du moyen de mesure de la hauteur du véhicule (109c) et pour apprécier que le véhicule se déplace lorsque la fréquence de variation et l'amplitude de variation du signal de sortie du moyen de mesure de la hauteur du véhicule sont continuellement supérieures aux valeurs de référence prescrites, respectives, pour une durée de temps dépassant une période prescrite;

un moyen de détermination (109e) de la défaillance du capteur de vitesse apte à recevoir les signaux de sortie du moyen de mesure de la vitesse du véhicule (109b) et du moyen d'appréciation du trajet du véhicule (109d) et pour déterminer qu'il y a une défaillance dans le capteur de vitesse du véhicule (10) et/ou des ruptures dans la connexion des fils entre le capteur de vitesse du véhicule (10) et le moyen de commande (109) lorsque la sortie du moyen de mesure de la vitesse du véhicule (109b) est zéro et lorsque le moyen d'appréciation du trajet du véhicule (109d) établit que le véhicule se déplace;

un moyen de détermination de courant du moteur (109f) apte à déterminer un niveau approprié de courant fourni au moteur (13) de manière que le courant du moteur est déterminé sur la base des signaux de sortie du moyen de mesure du couple de direction (109a) et du moyen de mesure de la vitesse du véhicule (109b) dans la condition de fonctionnement normal du capteur de vitesse du véhicule, mais ramené à zéro lorsque le moyen de détermination (109e) de la défaillance du capteur de vitesse détermine qu'il y a une défaillance dans le capteur de vitesse du véhicule (10) et/ou des ruptures dans la connexion des fils entre le capteur de la vitesse du véhicule (10) et le moyen de commande (109);

un moyen de commande de courant du moteur (109g) pour commander le courant fourni au moteur (13) en accord avec la sortie du moyen de détermination de courant du moteur (109g); et

un moyen de commande d'embrayage (109h) pour commander le fonctionnement de l'embrayage (16) de manière que l'embrayage (16) est débrayé lorsque la vitesse mesurée du véhicule se situe au-delà du niveau prescrit ou lorsque le moyen de détermination (109e) de la défaillance du capteur de vitesse détermine qu'il y a une défaillance dans le capteur de vitesse du véhicule (10) et/ou des ruptures dans la connexion des fils entre le capteur de vitesse du véhicule (10) et le moyen de commande (9), et embrayé lorsque la vitesse mesurée du véhicule est en-dessous du niveau prescrit.

6. Dispositif de direction assistée selon la revendication 2, 3 ou 4, comprenant en outre :

une soupape d'étranglement disposée dans un passage d'admission du moteur pour commander le débit d'air aspiré dans le moteur; et

un capteur de l'ouverture de l'étranglement (18) apte à détecter le degré d'ouverture de la soupape d'étranglement et à produire un signal de sortie représentant le degré d'ouverture détecté de l'étranglement;

et dans lequel le moyen de commande (109) comprend :

un moyen de mesure du couple de direction (109a) apte à recevoir le signal de sortie d'un capteur de couple (3) pour mesurer le couple de direction induit par l'opérateur;

un moyen de mesure de la vitesse du véhicule (109b) apte à recevoir le signal de sortie du capteur de vitesse du véhicule (10) pour mesurer la vitesse du véhicule;

un moyen de mesure de l'ouverture de l'étranglement (109i) apte à recevoir le signal de sortie du capteur de l'ouverture de l'étranglement (18') pour mesurer le degré d'ouverture de la soupape d'étranglement;

un moyen de détermination (109e) de la défaillance du capteur de vitesse apte à recevoir les sorties des signaux du moyen de mesure de la vitesse du véhicule (109b) et du moyen de mesure de l'ouverture de l'étranglement (109i) et à déterminer qu'il y a une défaillance dans le capteur de vitesse du véhicule (10) et/ou des ruptures dans la connexion des fils entre le capteur de vitesse du véhicule (10) et le moyen de commande (109) lorsque le degré d'ouverture de la soupape d'étranglement mesurée par le moyen de mesure de l'ouverture de l'étranglement (109i) est supérieur à une valeur de référence prescrite, en indiquant ainsi que le véhicule se déplace, et lorsqu'une sortie zéro du moyen de mesure de la vitesse du véhicule (109b) continue pour une durée de temps dépassant une période prescrite;

un moyen de détermination de courant du moteur (109f) apte à déterminer un niveau approprié de courant fourni au moteur (13) de manière que le courant du moteur est déterminé sur la base de signaux de sortie du moyen de mesure du couple de direction (109a) et du moyen de mesure de la vitesse du véhicule (109b) dans la condition de fonctionnement normal du capteur de vitesse du véhicule (10), mais ramené à zéro lorsque le moyen de détermination (109e) de la défaillance du capteur de vitesse détermine qu'il y a une défaillance dans le capteur de vitesse du véhicule (10) et/ou des ruptures dans la connexion des fils entre le capteur de la vitesse du véhicule (10) et le moyen de commande (109');

un moyen de commande de courant du moteur (109g) pour commander le courant fourni au moteur en accord avec la sortie du moyen de détermination de courant du moteur (109f); et

un moyen de commande d'embrayage (109h) pour commander le fonctionnement de l'embrayage (16) de manière que l'embrayage est débrayé lorsque la vitesse mesurée du véhicule est au-delà d'un niveau prescrit ou lorsque le moyen de détermination (109d) de la défaillance du capteur de vitesse détermine qu'il y a une défaillance dans le capteur de vitesse du véhicule (10) et/ou des ruptures dans la connexion des fils entre le capteur de vitesse du véhicule (10) et le moyen de commande (109'), et embrayé lorsque la vitesse mesurée du véhicule est en-dessous du niveau prescrit.

## Patentansprüche

1. Servolenkanlage für ein Fahrzeug, die aufweist: Einrichtungen (13, 14, 15, 17) mit einem Motor (13), die vorgesehen sind, um eine Hilfslenkkraft auf die Räder des Fahrzeugs zu übertragen, um dadurch die Lenkbewegung des Fahrzeugs zu unterstützen, und eine Steuereinrichtung (109), um die Übertragung der Hilfslenkkraft in Abhängigkeit von der Fahrzeuggeschwindigkeit zu steuern, wobei die Steuereinrichtung (109) wirksam ist, um die Übertragung der Hilfslenkkraft zu sperren, wenn in der Anlage eine Störung detektiert wird; dadurch gekennzeichnet, daß eine Bewegungsbestimmungseinrichtung (109) vorgesehen ist, um in Abhängigkeit von dem von einer Drosselklappenöffnungs-Meßeinrichtung (109i) gemessenen Öffnungsgrad einer Drosselklappe und/oder Änderungen der von einem Fahrzeughöhensensor (18) gemessenen Fahrzeughöhe zu bestimmen, ob das Fahrzeug in Bewegung ist; wobei in der Anlage eine Störung detektiert wird, wenn die Bewegungsbestimmungseinrichtung (109) bestimmt, daß das Fahrzeug in Bewegung ist und die Steuereinrichtung (109) keine Geschwindigkeitssignale empfängt, die die Fahrzeuggeschwindigkeit bezeichnen.

2. Servolenkanlage nach Anspruch 1, wobei die Anlage für ein Fahrzeug mit einem Lenkrad (1) ist, das betriebsmäßig mit lenkbaren Laufrädern verbunden ist, so daß das Lenkrad (1) von einem Fahrer eingeschlagen wird, um die lenkbaren Laufräder geeignet zu lenken, wobei die Servolenkanlage aufweist:

einen Drehmomentsensor (3) zum Aufnehmen einer von einem Fahrer auf das Lenkrad aufgebrachten Lenkkraft, um ein Ausgangssignal zu erzeugen, das die aufgenommene Lenkkraft repräsentiert;

einen Fahrzeuggeschwindigkeitssensor (10) zum Aufnehmen der Fahrzeuggeschwindigkeit, um ein Ausgangssignal zu erzeugen, das die aufgenommene Fahrzeuggeschwindigkeit repräsentiert;

eine Stromversorgung (11) zum Aktivieren des Motors (13) zur Servounterstützung der von dem Fahrer durch das Lenkrad verursachten Lenkbewegung; und

eine Kupplung (16), die abschaltbar ist, um die Übertragung der Hilfslenkkraft von dem Motor auf die Räder zu unterbrechen, wenn die Fahrzeuggeschwindigkeit einen vorbestimmten Wert überschreitet, und einschaltbar ist, um die Übertragung der Hilfslenkkraft herbeizuführen, wenn die Fahrzeuggeschwindigkeit den vorbestimmten Wert unterschreitet;

wobei die Steuereinrichtung (109) durch Leiter mit dem Drehmomentsensor (3) und dem Fahrzeuggeschwindigkeitssensor (10) verbunden und wirksam ist, um den Betrieb des Motors und der Kupplung auf der Basis ihrer Ausgangssignale derart zu steuern, daß die von dem Motor auf die Räder übertragene Hilfslenkkraft nach Maßgabe der Fahrgeschwindigkeit des Fahrzeugs und des vom Fahrer im Normalbetriebszustand des Fahrzeuggeschwindigkeitssensors auf das Lenkrad aufgebrachten Lenkdrehmoments gesteuert wird, aber auf Null verringert wird, wenn die Bewegungsbestimmungseinrichtung (109) bestimmt, daß das Fahrzeug in Bewegung ist und der Fahrzeuggeschwindigkeitssensor ausgefallen ist und/oder die Leiterverbindung zwischen dem Fahrzeuggeschwindigkeitssensor und der Steuereinheit gebrochen ist.

3. Servolenkanlage nach Anspruch 2, wobei der von der Stromversorgung (11) dem Motor (13) zugeführte Strom von der Steuereinrichtung (109) im Fall einer Störung im Fahrzeuggeschwindigkeitssensor und/oder Bruchstellen in der Leiterverbindung zwischen dem Fahrzeuggeschwindigkeitssensor und der Steuereinrichtung (109) auf Null verringert wird.

4. Servolenkanlage nach Anspruch 2, wobei die Kupplung (16) von der Steuereinrichtung (109) im Fall einer Störung im Fahrzeuggeschwindigkeitssensor (10) und/oder Bruchstellen in der Leiterverbindung zwischen dem Fahrzeuggeschwindigkeitssensor und der Steuereinrichtung (109) abgeschaltet wird.

5. Servolenkanlage nach Anspruch 2, 3 oder 4, die ferner einen Fahrzeughöhensensor (18) zum Aufnehmen der Höhe des Fahrzeugs vom Boden und zum Erzeugen eines die aufgenommene Fahrzeughöhe repräsentierenden Ausgangssignals aufweist, und wobei die Steuereinrichtung (109) aufweist:

eine Lenkdrehmoment-Meßeinrichtung (109a) zum Empfang des Ausgangssignals des Drehmomentsensors (3), um das vom Fahrer induzierte Lenkdrehmoment zu messen;

eine Fahrzeuggeschwindigkeits-Meßeinrichtung (109b) zum Empfang des Ausgangssignals des Fahrzeuggeschwindigkeitssensors (10), um die Fahrzeuggeschwindigkeit zu messen;

eine Fahrzeughöhen-Meßeinrichtung (109c) zum Empfang des Ausgangssignals des Fahrzeughöhensensors (18) und zum Erzeugen eines Ausgangssignals mit einer Änderungsfrequenz und einer Änderungsamplitude, die der gemessenen Fahrzeughöhe entsprechen;

eine Fahrzeugfahrt-Beurteilungseinrichtung (109d) für die Bewegungsbestimmungseinrichtung (109) zum Empfang des Ausgangssignals der Fahrzeughöhen-Meßeinrichtung (109c) und zum Beurteilen, daß das Fahrzeug fährt, wenn für eine Zeitdauer, die eine vorgegebene Zeitspanne überschreitet, die Änderungsfrequenz und die Änderungsamplitude des Ausgangssignals der Fahrzeughöhen-Meßeinrichtung kontinuierlich größer als jeweilige vorgegebene Bezugswerte sind;

eine Geschwindigkeitssensorausfall-Bestimmungseinrichtung (109e) zum Empfang der Ausgangssignale der Fahrzeuggeschwindigkeits-Meßeinrichtung(109b) und der Fahrzeugfahrt-Beurteilungseinrichtung (109d) und zum Bestimmen, daß eine Störung im Fahrzeuggeschwindigkeitssensor (10) und/oder Brunchstellen in der Leiterverbindung zwischen dem Fahrzeuggeschwindigkeitssensor (10) und der Steuereinrichtung (109) vorliegen, wenn das Ausgangssignal der Fahrzeuggeschwindigkeits-Meßeinrichtung (109b) Null ist und wenn die Fahrzeugfahrt-Beurteilungseinrichtung (109d) beurteilt, daß das Fahrzeug fährt;

eine Motorstrom-Bestimmungseinrichtung (109f) zum Bestimmen eines geeigneten Werts des dem Motor (13) zugeführten Stroms derart, daß der Motorstrom auf der Basis der Ausgangssignale der Lenkdrehmoment-Meßeinrichtung (109a) und der Fahrzeuggeschwindigkeits-Meßeinrichtung (109b) im Normalbetriebszustand des Fahrzeuggeschwindigkeitssensors bestimmt wird, aber zu Null gemacht wird, wenn die Geschwindigkeitssensorausfall-Bestimmungseinrichtung (109e) bestimmt, daß eine Störung im Fahrzeuggeschwindigkeitssensor (10) und/oder Bruchstellen in der Leiterverbindung zwischen dem Fahrzeuggeschwindigkeitssensor (10) und der Steuereinrichtung (109) vorliegen;

eine Motorstrom-Steuereinrichtung (109g), um den dem Motor (13) zugeführten Strom nach Maßgabe des Ausgangssignals der Motorstrom-Bestimmungseinrichtung (109g) zu steuern; und

eine Kupplungs-Steuereinrichtung (109h), um den Betrieb der Kupplung (16) derart zu steuern, daß die Kupplung (16) abgeschaltet wird, wenn die gemessene Fahrzeuggeschwindigkeit den vorbestimmten Wert überschreitet oder wenn die Geschwindigkeitsensorausfall-Bestimmungseinrichtung (109e) bestimmt, daß eine Störung im Fahrzeuggeschwindigkeitssensor (10) und/oder Bruchstellen in der Leiterverbindung zwischen dem Fahrzeuggeschwindigkeitssensor (10) und der Steuereinrichtung (109) vorliegen, und eingeschaltet wird, wenn die gemessene Fahrzeuggeschwindigkeit den vorbestimmten Wert unterschreitet.

6. Servolenkanlage nach Anspruch 2, 3 oder 4, die ferner aufweist:

eine Drosselklappe, die in einem Saugkanal der Brennkraftmaschine angeordnet ist, um die Durchflußmenge von in die Maschine angesaugter Luft einzustellen; und

einen Drosselklappenöffnungssensor (18) zum Aufnehmen des Öffnungsgrads der Drosselklappe und zum Erzeugen eines Ausgangssignals, das den aufgenommenen Drosselklappenöffnungsgrad repräsentiert; und wobei die Steuereinrichtung (109) aufweist:

eine Lenkdrehmoment-Meßeinrichtung (109a) zum Empfang des Ausgangssignals des Drehmomentsensors (3), um das vom Fahrer induzierte Lenkdrehmoment zu messen;

eine Fahrzeuggeschwindigkeits-Meßeinrichtung (109b) zum Empfang des Ausgangssignals des Fahrzeuggeschwindigkeitssensors (10), um die Fahrzeuggeschwindigkeit zu messen;

eine Drosselklappenöffnungs-Meßeinrichtung (109i) zum Empfang des Ausgangssignals des Drosselklappenöffnungssensors (18'), um den Öffnungsgrad der Drosselklappe zu messen;

eine Fahrgeschwindigkeitsensorausfall-Bestimmungseinrichtung (109d) zum Empfang der Ausgangssignale der Fahrzeuggeschwindigkeits-Meßeinrichtung(109b) und der Drosselklappenöffnungs-Meßeinrichtung (109i) und zum Bestimmen, daß eine Störung im Fahrzeuggeschwindigkeitssensor (10) und/oder Bruchstellen in der Leiterverbindung zwischen dem Fahrzeuggeschwindigkeitssensor (10) und der Steuereinrichtung (109) vorliegen, wenn der von der Drosselklappenöffnungs-Meßeinrichtung (109i) gemessene Öffnungsgrad der Drosselklappe größer als ein vorgegebener Bezugswert ist, wodurch angezeigt wird, daß das Fahrzeug in Bewegung ist, und wenn das Ausgangssignal Null der Fahrzeuggeschwindigkeits-Meßeinrichtung (109b) für eine Zeitdauer andauert, die eine vorgegebene Zeitspanne überschreitet;

eine Motorstrom-Bestimmungseinrichtung (109f) zum Bestimmen eines geeigneten Werts des dem Motor (13) zugeführten Stroms derart, daß der Motorstrom auf der Basis der Ausgangssignale der Lenkdrehmoment-Meßeinrichtung (109a) und der Fahrzeuggeschwindigkeits-Meßeinrichtung (109b) im Normalbetriebszustand des Fahrzeuggeschwindigkeitssensors (10) bestimmt wird, aber zu Null gemacht wird, wenn die Geschwindigkeitsensorausfall-Bestimmungseinrichtung (109d) bestimmt, daß eine Störung im Fahrzeuggeschwindigkeitssensor (10) und/oder Bruchstellen in der Leiterverbindung zwischen dem Fahrzeuggeschwindigkeitssensor (10) und der Steuereinrichtung (109') vorliegen;

eine Motorstrom-Steuereinrichtung (109g), um den dem Motor zugeführten Strom nach Maßgabe des Ausgangssignals der Motorstrom-Bestimmungseinrichtung (109f) zu steuern; und

eine Kupplungs-Steuereinrichtung (109h), um den Betrieb der Kupplung (16) derart zu steuern, daß die Kupplung abgeschaltet wird, wenn die gemessene Fahrzeuggeschwindigkeit den vorbestimmten Wert überschreitet oder wenn die Geschwindigkeitsensorausfall-Bestimmungseinrichtung (109d) bestimmt, daß eine Störung im Fahrzeuggeschwindigkeitssensor (10) und/oder Bruchstellen in der Leiterverbindung zwischen dem Fahrzeuggeschwindigkeitssensor (10) und der Steuereinrichtung (109') vorliegen, und eingeschaltet wird, wenn die gemessene Fahrzeuggeschwindigkeit den vorbestimmten Wert unterschreitet.

Fig. 1     PRIOR ART

Fig. 2

*Fig. 3*

STEERING TORQUE

*Fig. 4*

VEHICLE SPEED

# Fig. 5

START

INITIALIZE

MEASURE STEERING TORQUE ($T_S$) — S1

MEASURE VEHICLE SPEED (V) — S2

MEASURE VEHICILE HEIGHT (H.) — S3

V = 0 ? — S4

**YES →**

S11 — CALCULATE VEHICLE HEIGHT VARIATION FREQUENCY ($f_H$) & AMPLITUDE ($A_H$)

S12 — $f_H > f_s$ ? — NO →

**YES**

S13 — $A_H > A_S$ ? — NO →

**YES**

S14 — $t_D > t_s$ ? — NO →

**YES**

**NO** (from S4)

READ OUT MOTOR CURRENT ($I_M$) (CORRES. TO $T_S$) — S5

$V > V_1$ ? — S6 — **YES →**

**NO**

$V > V_2$ ? — S7 — NO →

**YES**

S15 — OUTPUT ZERO MOTOR CURRENT

S8 — OUTPUT MOTOR CURRENT ($I_{OF}$)

OUTPUT MOTOR CURRENT ($I_M$) — S10

S16 — DISCONNECT CLUTCH

CONNECT CLUTCH — S9

$f_S$ = REFERENCE FREQUENCY

$A_S$ = REFERENCE AMPLITUDE

$t_D$ = TIME DURATION

$t_S$ = REFERENCE TIME

$V_1$ = FIRST REFERENCE SPEED

$V_2$ = SECOND REFERENCE SPEED

## Fig. 6

VEHICLE SPEED SENSOR

10 — THROTTLE OPENING SENSOR

18'

109'

1

2

3

TORQUE SENSOR

109a — STEERING TORQUE MEASURING MEANS

109b — VEHICLE SPEED MEASURING MEANS

109i — THROTTLE OPENING MEASURING MEANS

109d — SPEED-SENSOR FAILURE DETERMINING MEANS

109f — MOTOR CURRENT DETERMINING MEANS

109g — MOTOR CURRENT CONTROLLING MEANS

109h — CLUTCH CONTROLLING MEANS

13

16 CLUTCH

15

14

R

MOTOR

6  6b  17  7b  8b

EP 0 247 863 B1

START

INITIALIZE

MEASURE STEERING TORQUE (T_S) — S1

MEASURE VEHICLE SPEED (V) — S2

MEASURE THROTTLE OPENING (S_0) — S3'

$V = 0$ ? — S4   YES / NO

S17 — $S_0 > S_S$ ?   NO / YES

S18 — $t_D' > t_S'$ ?   NO / YES

READ OUT MOTOR CURRENT (I_M) (CORRES. TO T_S) — S5

$V > V_1$ ? — S6   YES / NO

$V > V_2$ ? — S7   NO / YES / NO

S15 — OUTPUT ZERO MOTOR CURRENT

OUTPUT MOTOR CURRENT (I_QF) — S8

OUTPUT MOTOR CURRENT (I_M) — S10

S16 — DISCONNECT CLUTCH

CONNECT CLUTCH — S9

$S_S$ = REFERENCE THROTTLE OPENING

$t_D'$ = TIME DURATION

$t_S'$ = REFERENCE TIME

$V_1$ = FIRST REFERENCE SPEED

$V_2$ = SECOND REFERENCE SPEED